# EUROPÄISCHE PATENTSCHRIFT

(11) **EP 2 569 206 B1**
(45) Veröffentlichungstag und Bekanntmachung des Hinweises auf die Patenterteilung: **04.03.2015**
(21) Anmeldenummer: 11720999.9
(22) Anmeldetag: 13.05.2011
(51) Int. Cl.: B62D 6/10, B62D 15/02, G01L 3/10, G01L 5/22

(54) **SENSORBAUGRUPPE FÜR KRAFTFAHRZEUG-LENKSYSTEME**
SENSOR ASSEMBLY FOR MOTOR VEHICLE STEERING SYSTEMS
MODULE DE CAPTEUR POUR SYSTÈMES DE DIRECTION DE VÉHICULES AUTOMOBILES

(30) Priorität: 14.05.2010 DE 102010020599
(43) Veröffentlichungstag der Anmeldung: 20.03.2013
(73) Patentinhaber: TRW Automotive GmbH, 73553 Alfdorf (DE)
(72) Erfinder: BECKER, Ingo, 52441 Linnich (DE); KRÜGER, Bernd, 47877 Willich (DE)
(74) Vertreter: Prinz & Partner mbB
(86) Internationale Anmeldenummer: PCT/EP2011/002375
(87) Internationale Veröffentlichungsnummer: WO 2011/141179

(56) Entgegenhaltungen:
- EP-A1- 1 238 891
- EP-A1- 1 925 533
- WO-A1-2008/068339
- DE-A1- 10 254 751
- DE-A1- 19 816 568
- DE-A1-102009 046 997

## Beschreibung

Die Erfindung betrifft eine Sensorbaugruppe für Kraftfahrzeug-Lenksysteme, mit einem Drehmomentsensor zur magnetischen Bestimmung eines Lenkmoments sowie einem Drehwinkelsensor zur magnetischen Bestimmung eines absoluten Lenkwinkels.

Der Einbau von Sensoren in Kraftfahrzeug-Lenksysteme zur Bestimmung des Lenkmoments und/oder des Lenkwinkels ist heutzutage üblich, um beispielsweise Lenkhilfeeinrichtungen ansteuern zu können.

Im Rahmen der Entwicklung elektrischer Lenkungen gewinnt die zuverlässige Bereitstellung von Sensordaten über Lenkwinkel und Lenkmomente zunehmend an Bedeutung.

Neben dem grundlegenden Ziel, eine hohe Ausfallsicherheit der Sensorik und damit des jeweiligen Lenksystems zu gewährleisten, gibt es aufgrund beengter Bauraumverhältnisse im Bereich der Lenkung auch Bestrebungen, die notwendigen Sensoren möglichst kompakt und preiswert zu konstruieren.

In der DE 602 00 499 T2 ist beispielsweise ein recht kompakter Stellungsfühler zur Feststellung von Verdrehungen einer Lenksäule beschrieben, bei dem die gemessenen Winkel in der Größenordnung von etwa 10° liegen und zur Erfassung eines Drehmoments verwendet werden. Um das Drehmoment zu bestimmen, wird dabei lediglich ein rohrförmiges Magnetjoch benötigt, an dessen radialer Außenseite mehrere Magnete paarweise angebracht sind.

Neben Informationen zum Lenkmoment sind bei Fahrzeuglenksystemen auch Informationen zum anliegenden Lenkwinkel, insbesondere zum absoluten Lenkwinkel, von großer Bedeutung. Im Stand der Technik sind bereits Drehgeber beschrieben, welche jeder Winkelposition eindeutig einen codierten Positionswert zuordnen, sodass der absolute Drehwinkel auch für eine Lenkradumdrehung von mehr als 360° bekannt ist.

In der gattungsgemäßen DE 102 54 751 A1 ist bereits eine Vorrichtung zum Messen eines Winkels und eines auf eine Lenkstange einwirkenden Moments beschrieben, die einen Encoderscheibenträger mit zwei magnetischen Codierungen bzw. Encodern umfasst, wobei ein Encoder des Drehmomentsensors auf einer axialen Stirnseite des Encoderscheibenträgers und ein Encoder des Winkelsensors auf der entgegengesetzten axialen Stirnseite des Encoderscheibenträgers angeordnet ist.

Auch die Drehmomentsensoranordnung gemäß der WO 2008/068339 A1 zeigt alle Merkmale im Oberbegriff des Anspruchs 1 und umfasst ein einstückig ausgebildetes, magnetisches Encoder-Bauteil mit einer ersten Encoderspur, welche einem Magnetfeldsensorelement zur Bestimmung des Lenkwinkels zugeordnet ist, sowie einer zweiten Encoderspur, welche einem Magnetfeldsensorelement zur Bestimmung des an der Lenkwelle angreifenden Drehmoments zugeordnet ist.

Aufgabe der Erfindung ist es, eine möglichst einfache und kompakte Sensorbaugruppe bereitzustellen, die notwendige Sensordaten für Kraftfahrzeug-Lenksysteme liefert.

Erfindungsgemäß wird diese Aufgabe gelöst durch eine Sensorbaugruppe für Kraftfahrzeug-Lenksysteme, mit einem Drehmomentsensor zur magnetischen Bestimmung eines Lenkmoments sowie einem Drehwinkelsensor zur magnetischen Bestimmung eines absoluten Lenkwinkels, wobei genau ein Trägerelement mit einer magnetischen Codierung zur Bestimmung des Lenkmoments und des absoluten Lenkwinkels vorgesehen ist, die gemeinsam vom Drehmomentsensor und vom Drehwinkelsensor genutzt wird. Durch die Integration des Drehmomentsensors und des Drehwinkelsensors in eine Sensorbaugruppe, welche statt der üblichen zwei oder drei magnetisch codierten Trägerelemente lediglich ein einziges solches Trägerelement aufweist, ergibt sich eine strukturell besonders einfach aufgebaute, sehr kompakte Bauweise, welche zudem infolge der Einsparung wenigstens eines Trägerelements mit magnetischer Codierung sehr kostengünstig herstellbar ist.

Besonders bevorzugt kann der Drehwinkelsensor einen Winkelbereich innerhalb eines Winkelsegments messen. Als Winkelsegment wird in diesem Zusammenhang der Bereich des Trägerelements verstanden, in dem ein magnetisches Polpaar bestehend aus Nord- und Südpol angeordnet ist. Auf Grundlage einer Veränderung der magnetischen Feldlinien ist es somit möglich, auch sehr kleine Drehbewegungen des Trägerelements durch den Drehwinkelsensor zu erfassen und dadurch den absoluten Lenkwinkel auch innerhalb eines bestimmten Winkelsegments zu bestimmen.

In vorteilhafter Weiterbildung der Erfindung kann der Drehwinkelsensor eine Zähleinrichtung aufweisen, die eine Mehrzahl von Winkelsegmenten zählt. Dies bedeutet, dass bei einer Rotation des Trägerelements die Anzahl von Winkelsegmenten bzw. Polpaaren, die sich an dem Drehwinkelsensor vorbeibewegt, von der Zähleinrichtung gezählt wird. In diesem Zusammenhang versteht sich, dass bereits im Voraus bekannt ist, wie groß die auf dem Trägerelement angeordneten jeweiligen Winkelsegmente bzw. ihre Teilung sind. Die Summe von gezählten Winkelsegmenten entspricht in erster Näherung einem Winkelintervall, in dem der absolute Lenkwinkel liegt. Die genaue Bestimmung des absoluten Lenkwinkels wird dadurch gewährleistet, dass die Summe von gezählten Winkelsegmenten mit dem Winkelbereich, der von dem Drehwinkelsensor innerhalb eines Winkelbereichs gemessen wird, kombiniert wird. Im Ergebnis kann ein absoluter Lenkwinkel auch für Umdrehungen bestimmt werden, die größer als 360° sind und einer mehrfachen Umdrehung des Lenkrads bzw. des Trägerelements entsprechen.

In vorteilhafter Weiterbildung der Erfindung kann die Zähleinrichtung eine Änderung des absoluten Lenkwinkels auch im stromlosen Zustand erfassen und speichern. Somit stehen dem Lenksystem im Fahrzeugbetrieb jederzeit, das heißt insbesondere auch unmittelbar nach dem Anlassen des Kraftfahrzeugs, Informationen zum aktuell eingestellten, absoluten Lenkwinkel vor. Dabei ist weder eine zeitaufwendige Systeminitialisierung nach dem Fahrzeugstart noch eine ununterbrochene, dauerhafte Stromversorgung der Sensorbaugruppe notwendig.

In einer alternativen Ausführungsform der Sensorbaugruppe kann die Zähleinrichtung an einen elektrischen Energiespeicher angeschlossen und folglich dauerhaft bestromt sein. Da der Energieverbrauch der Zähleinrichtung sehr gering ist, kann die Stromversorgung bei abgeschalteter Zündung beispielsweise problemlos von der Fahrzeugbatterie bereitgestellt werden.

Vorteilhafte und zweckmäßige Ausgestaltungen des Erfindungsgedankens sind in den Unteransprüchen beschrieben.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 einen perspektivischen Detailausschnitt aus einem Kraftfahrzeug-Lenksystem mit erfindungsgemäßer Sensorbaugruppe;
- Figur 2 eine schematische Skizze eines in die erfindungsgemäße Sensorbaugruppe integrierten Drehwinkelsensors;
- Figur 3 ein Diagramm mit aufgenommenen Sensorsignalen;
- Figur 4 ein Diagramm mit weiterverarbeiteten Sensorsignalen;
- Figur 5 ein weiteres Diagramm mit weiterverarbeiteten Sensorsignalen;
- Figur 6 ein Diagramm mit einer aus den Sensorsignalen gewonnenen Indexfunktion; und
- Figur 7 eine schematische Skizze einer Multiturn-Vorrichtung.

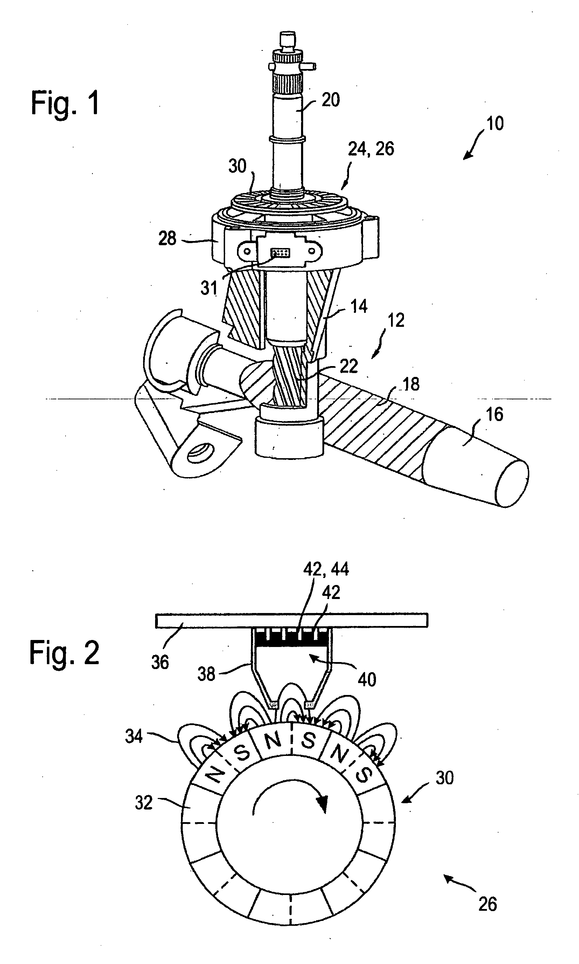

Die Figur 1 zeigt ein Kraftfahrzeug-Lenksystem 10 im Bereich eines Lenkgetriebes 12. Das Lenkgetriebe 12 umfasst ein Getriebegehäuse 14, eine darin verschiebbar angeordnete Zahnstange 16 mit einer Verzahnung 18 sowie eine Lenkwelle 20. Die Lenkwelle 20 weist eine Ritzelverzahnung 22 auf, die dafür vorgesehen ist, in die Verzahnung 18 der Zahnstange 16 einzugreifen. Sowohl die Verzahnung 18 als auch die Ritzelverzahnung 22 können als Schrägverzahnungen ausgebildet sein.

An der Lenkwelle 20 ist außerdem eine Sensorbaugruppe 24 mit einem nicht näher dargestellten Drehmomentsensor zur magnetischen Bestimmung eines Lenkmoments sowie einem Drehwinkelsensor 26 (siehe auch Figur 2) zur magnetischen Bestimmung eines absoluten Lenkwinkels α angebracht. Die Sensorbaugruppe 24 weist ferner ein Sensorgehäuse 28 sowie ein Trägerelement 30 mit magnetischer Codierung auf. Das Sensorgehäuse 28 ist üblicherweise am Getriebegehäuse 14 befestigt, wohingegen das Trägerelement 30 drehfest an der Lenkwelle 20 angebracht werden kann. Bei dem Trägerelement 30 handelt es sich um ein drehbares magnetisches Polrad, das mit zumindest einem Polpaar bestehend aus Nord-/Südpol versehen ist, und vorzugsweise eine Mehrzahl von Polpaaren aufweist.

Üblicherweise ist das Trägerelement 30 im Inneren des Sensorgehäuses 28 aufgenommen und in Figur 1 lediglich aus Gründen der besseren Erkennbarkeit axial außerhalb des Sensorgehäuses 28 dargestellt.

Am Sensorgehäuse 28 der Baugruppe 24 ist im übrigen ein Steckverbinder 31 vorgesehen, in den ein komplementärer Steckverbinder eingreifen kann, sodass die Sensorbaugruppe 24 an eine (nicht gezeigte) elektronische Steuereinheit angeschlossen werden kann.

Obwohl das Kraftfahrzeug-Lenksystem 10 gemäß Figur 1 beispielhaft eine Zahnstangenlenkung zeigt, ist klar, dass die Verwendung der Sensorbaugruppe 24 nicht auf Zahnstangenlenkungen beschränkt ist, sondern auch bei anderen Kraftfahrzeug-Lenksystemen 10 eingesetzt werden kann.

Die Besonderheit der Erfindung liegt nun darin, dass ausgehend vom Drehmomentsensor eine Sensorbaugruppe 24 mit integriertem Drehwinkelsensor 26 geschaffen wird, wobei die Sensorbaugruppe 24 zur Bestimmung des Lenkmoments und des absoluten Lenkwinkels α lediglich ein einziges Trägerelement 30 mit magnetischer Codierung benötigt, das gemeinsam vom Drehmomentsensor und vom Drehwinkelsensor 26 genutzt wird. Bezüglich des Drehwinkelsensors bedeutet dies, dass eine Änderung des Magnetfelds, die sich bei einer Rotation des Trägerelements 30 einstellt, von diesem Drehwinkelsensor 26 geeignet erfasst und ausgelesen wird. Bezüglich des Drehmomentsensors der Sensorbaugruppe 24 wird explizit auf die DE 602 00 499 T2 verwiesen, in der beispielhaft ein geeigneter Drehmomentsensor für die Sensorbaugruppe 24 gemäß Figur 1 beschrieben ist.

Die Figur 2 zeigt den schematischen Aufbau des im Sensorgehäuse 28 aufgenommenen Drehwinkelsensors 26.

Es ist gut zu erkennen, dass das Trägerelement 30 mit magnetischer Codierung im vorliegenden Fall ein drehbares Trägerrad mit mehreren über den Umfang bzw. ringförmig verteilten Magneten 32 ist. Die Magnete 32 sind dabei Dauermagnete, welche in Umfangsrichtung so angeordnet sind, dass abwechselnd Nordpole und Südpole aneinandergrenzen. Dementsprechend bilden sich die in Figur 2 angedeuteten Magnetfeldlinien 34 aus.

Der Drehwinkelsensor 26 umfasst neben diesem magnetisch codierten Trägerelement 30, welches er gemeinsam mit dem Drehmomentsensor nutzt, eine Leiterplatte 36, optional einen Magnetflusskonzentrator 38 und einen anwendungsspezifischen integrierten Schaltkreis 40 (im Folgenden: ASIC). Der ASIC ist dabei eine elektronische Schaltung, welche nach individuellen Anforderungen als integrierter Schaltkreis realisiert wurde und im vorliegenden Fall wenigstens ein GMR-, AMR- oder Hall-Sensorelement 42 aufweist.

Der Magnetflusskonzentrator 38 ist zwischen der Leiterplatte 36 und dem Trägerelement 30 angeordnet und umfasst in der Regel wenigstens ein geeignet geformtes Blech, um den Magnetfluss im Bereich des ASIC 40 so zu leiten, dass ein Sensorelement 42 der ASIC 40 die Magnetflussänderungen bei einer Verdrehung des Trägerelements 30 erfassen kann.

Genau wie der ASIC 40 ist der Magnetflusskonzentrator 38 auf der Leiterplatte 36 angebracht und zusammen mit der Leiterplatte 36 im Sensorgehäuse 28 angeordnet.

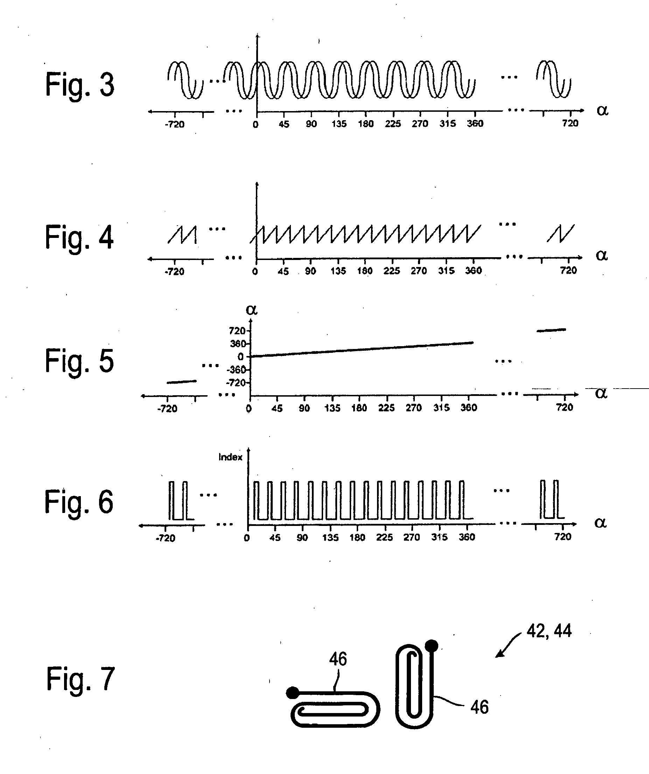

Der ASIC 40 weist beispielsweise zwei um 90° versetzte Sensoreinheiten auf, wobei die Figur 3 ein Diagramm zeigt, in welchem die Signalverläufe bei rotierendem Trägerelement 30 aufgezeichnet sind. Dabei wurde der absolute Lenkwinkel α bei Geradeausfahrt zu 0° definiert und davon ausgehend beispielhaft ein maximaler Lenkeinschlag von 720° nach links und rechts angenommen.

Die sinus- bzw. kosinusförmigen Signalverläufe gemäß Figur 3 lassen sich in dem ASIC 40 mittels der Arcustangensfunktion weiterverarbeiten und in einen sägezahnförmigen Signalverlauf gemäß Figur 4 überführen.

Der Drehwinkelsensor 26 weist eine Zähleinrichtung 44 zur Erfassung von absoluten Drehwinkeln α, wobei diese absoluten Drehwinkel insbesondere größer als 360° sein können.

Gemäß einer ersten Ausführungsform der Sensorbaugruppe 24 ist die Zähleinrichtung 44 an einen elektrischen Energiespeicher wie zum Beispiel eine Fahrzeugbatterie angeschlossen. Dadurch ist die Zähleinrichtung 44 auch bei abgeschaltetem Fahrzeugmotor dauerhaft bestromt. Folglich kann die Zähleinrichtung 44 als einfacher Zähler in dem ASIC 40 ausgebildet sein. Eine entsprechende Zähl- oder Indexfunktion ist in Figur 6 beispielhaft dargestellt. Dies bedeutet, dass bei einer Rotation bzw. Verdrehung des Trägerelements 30 die Anzahl von von Winkelsegmenten (bzw. Polpaaren) gezählt wird, die sich an dem Drehwinkelsensor vorbeibewegen. Die Summe der gezählten Winkelsegmente liefert dann einen Rückschluss auf einen Winkel, um den das Lenkrad bzw. das Trägerelement 30 um seine Achse verdreht worden ist, wobei dieser Winkel auch größer als eine Vollumdrehung bzw. 360° sein kann

Aus den verarbeiteten Sensorsignalen lassen sich dann entweder innerhalb des ASIC 40 oder in einer zentralen elektronischen Steuereinheit die Werte für einen absoluten Lenkwinkel α ermitteln. Dies ist im Diagramm der Figur 5 dargestellt.

In einer zweiten Ausführungsform der Sensorbaugruppe 24 ist die Zähleinrichtung 44 so ausgebildet, dass sie eine Änderung des absoluten Lenkwinkels α auch im stromlosen Zustand erfassen und speichern kann. Dies bietet den Vorteil, dass kein separater elektrischer Energiespeicher vorgesehen werden muss bzw. die vorhandene Fahrzeugbatterie nicht durch den Drehwinkelsensor 26 belastet wird.

Die Figur 7 zeigt schematisch eine Ausführungsform der Zähleinrichtung 44, die auch im stromlosen Zustand eine Änderung des absoluten Lenkwinkels α erfassen und speichern kann. Die als magnetischer Zähler ausgebildete Zähleinrichtung 44 umfasst hier zwei GMR-Sensorelemente 42, welche jeweils eine n- fache spiralförmige Multischichtstruktur 46 aufweisen. In solchen Multischichtstrukturen 46 bilden sich sogenannte Domänenwände aus. Ferner ändert sich bei einer Verdrehung des Trägerelements 30 die Magnetisierung in der Multischichtstruktur 46 und die Resistivität der Multiturn-Vorrichtung 44. Einer bestimmten Resistivität lässt sich dann je nach Ausführung der Zähleinrichtung 44 beispielsweise eine Summe von Winkelsegmenten zuordnen, woraus ein Rückschluss auf die konkrete Umdrehungszahl gewonnen wird. Hierbei kann die Resistivität auch im stromlosen Zustand der Zähleinrichtung 44 erhalten bleiben und über einen an die Zähleinrichtung 44 angelegten Strom jederzeit abgerufen werden.

Der Messbereich der Zähleinrichtung 44 hängt dabei von der Windungszahl der spiralförmigen Multischichtstrukturen 46 ab.

Da derartige Zähleinrichtung 44 prinzipiell aus dem Stand der Technik bekannt sind, wird auf deren die konkrete Konstruktion und Funktionsweise nicht näher eingegangen. In diesem Zusammenhang wird z.B. hingewiesen auf die DE 10 2004 020 149 A1, welche den Effekt der Bildung von Domänenwänden in spiralförmig angeordneten Multischichtstrukturen beschreibt.

Zur genaueren Erfassung des absoluten Lenkwinkels ist der Drehwinkelsensor dazu ausgelegt, dass er einen Winkelbereich innerhalb eines Winkelsegments, d.h. in einem Winkelbereich eines Polpaares misst. Diese Messung beruht auf der Veränderung der magnetischen Feldlinien, die sich bereits bei kleinen Verdrehwinkeln des Trägerelements 30 einstellt. Die Messung innerhalb eines entsprechenden Winkelsegments wird überlagert bzw. kombiniert mit der Summe von gezählten Winkelsegmenten, , sodass sich insgesamt ein exakter Wert des absoluten Lenkwinkels α ergibt. Die Überlagerung bzw. Kombination der Messung des Winkelbereichs innerhalb eines bestimmten Winkelsegments mit der Summe der gezählten Winkelsegmente zur Bestimmung des absoluten Lenkwinkels α kann entweder in dem ASIC 40 oder in einer (nicht gezeigten) zentralen elektronischen Steuereinheit durchgeführt werden.

## Patentansprüche

1. Sensorbaugruppe für Kraftfahrzeug-Lenksysteme (10), mit
einem Drehmomentsensor zur magnetischen Bestimmung eines Lenkmoments sowie
einem Drehwinkelsensor (26) zur magnetischen Bestimmung eines absoluten Lenkwinkels (α),
**dadurch gekennzeichnet, dass** genau ein Trägerelement (30) mit einer magnetischen Codierung zur Bestimmung des Lenkmoments und des absoluten Lenkwinkels (α) vorgesehen ist, die gemeinsam vom Drehmomentsensor und vom Drehwinkelsensor (26) genutzt wird.

2. Sensorbaugruppe nach Anspruch 1, **dadurch gekennzeichnet, dass** das Trägerelement (30) ein drehbares Trägerrad mit einer Mehrzahl von paarweise radial angeordneten Magneten (32) ist.

3. Sensorbaugruppe nach Anspruch 1 oder 2, **gekennzeichnet durch** eine Leiterplatte (36), auf der wenigstens ein GMR-, AMR- oder Hall-Sensorelement (42) angebracht ist.

4. Sensorbaugruppe nach Anspruch 3, **dadurch gekennzeichnet, dass** zwischen der Leiterplatte (36) und dem Trägerelement (30) mit magnetischer Codierung ein Magnetflusskonzentrator (38) vorgesehen ist.

5. Sensorbaugruppe nach einem der vorhergehenden Ansprüche, **dadurch gekennzeichnet, dass** der Drehwinkelsensor (26) einen Winkelbereich innerhalb eines Winkelsegments misst.

6. Sensorbaugruppe nach Anspruch 5, **dadurch gekennzeichnet, dass** der Drehwinkelsensor (26) eine Zähleinrichtung aufweist, die eine Mehrzahl von Winkelsegmenten zählt, wobei die Summe von Winkelsegmenten mit dem innerhalb eines Winkelsegments gemessenen Winkelbereichs kombiniert wird, um daraus den absoluten Lenkwinkel (α) zu bestimmen.

7. Sensorbaugruppe nach Anspruch 6, **dadurch gekennzeichnet, dass** die Zähleinrichtung (44) mit einem elektrischen Energiespeicher verbunden ist.

8. Sensorbaugruppe nach Anspruch 6, **dadurch gekennzeichnet, dass** die Zähleinrichtung (44) eine Änderung des absoluten Lenkwinkels (α) im stromlosen Zustand erfasst und speichert.

## Claims

1. A sensor assembly for motor vehicle steering systems (10), comprising
a torque sensor for magnetically determining a steering torque, and
a rotational angle sensor (26) for magnetically determining an absolute steering angle (α),
**characterized in that** precisely one carrier member (30) is provided which has a magnetic coding for determining the steering torque and the absolute steering angle (α), which is shared by the torque sensor and the rotational angle sensor (26).

2. The sensor assembly according to claim 1, **characterized in that** the carrier member (30) is a rotatable carrier wheel having a plurality of magnets (32) arranged radially in pairs.

3. The sensor assembly according to claim 1 or 2, **characterized by** a printed circuit board (36) on which at least one GMR, AMR, or Hall sensor element (42) is mounted.

4. The sensor assembly according to claim 3, **characterized in that** a magnetic flux concentrator (38) is provided between the printed circuit board (36) and the carrier member (30) having a magnetic coding.

5. The sensor assembly according to any of the preceding claims, **characterized in that** the rotational angle sensor (26) measures an angular range within an angular segment.

6. The sensor assembly according to claim 5, **characterized in that** the rotational angle sensor (26) includes a counting means which counts a plurality of angular segments, the sum of angular segments being combined with the angular range measured within an angular segment to determine the absolute steering angle (α) therefrom.

7. The sensor assembly according to claim 6, **characterized in that** the counting means (44) is connected to an electrical energy storage.

8. The sensor assembly according to claim 6, **characterized in that** the counting means (44) detects and stores a variation in the absolute steering angle (α) in the de-energized condition.

## Revendications

1. Ensemble de capteurs pour des systèmes de direction (10) de véhicule automobile, comportant
un capteur de couple pour la détermination magnétique d'un couple de direction, et
un capteur de position angulaire (26) pour la détermination magnétique d'un angle de direction absolu (α),
**caractérisé en ce qu'**il est prévu exactement un élément support (30) qui présente un codage magnétique pour la détermination du couple de direction et de l'angle de direction absolu (α), lequel est utilisé en commun par le capteur de couple et le capteur de position angulaire (26).

2. Ensemble de capteurs selon la revendication 1, **caractérisé en ce que** l'élément support (30) est une roue de support rotative présentant une pluralité d'aimants (32) agencés radialement par paires.

3. Ensemble de capteurs selon la revendication 1 ou 2, **caractérisé par** une carte de circuits imprimés (36) sur laquelle au moins un élément capteur (42) GMR, AMR ou à effet Hall est agencé.

4. Ensemble de capteurs selon la revendication 3, **caractérisé en ce qu'**un concentrateur de flux magnétique (38) est prévu entre la carte de circuits imprimés (36) et l'élément support (30) qui présente un codage magnétique.

5. Ensemble de capteurs selon l'une des revendications précédentes, **caractérisé en ce que** le capteur de position angulaire (26) mesure une zone angulaire à l'intérieur d'un segment angulaire.

6. Ensemble de capteurs selon la revendication 5, **caractérisé en ce que** le capteur de position angulaire (26) présente un compteur qui compte une pluralité de segments angulaires, la somme de segments angulaires étant combinée avec la zone angulaire mesurée à l'intérieur d'un segment angulaire pour déterminer sur cette base l'angle de direction absolu (α).

7. Ensemble de capteurs selon la revendication 6, **caractérisé en ce que** le compteur (44) est relié à un accumulateur d'énergie électrique.

8. Ensemble de capteurs selon la revendication 6, **caractérisé en ce que** le compteur (44) saisit et mémorise un changement de l'angle de direction absolu (α) à l'état sans courant.
